Europäisches Patentamt

European Patent Office

Office européen des brevets

(11) Veröffentlichungsnummer: **0 252 434 B1**

## (12) EUROPÄISCHE PATENTSCHRIFT

(45) Veröffentlichungstag der Patentschrift: **25.03.92**

(21) Anmeldenummer: **87109508.9**

(22) Anmeldetag: **02.07.87**

(51) Int. Cl.⁵: **B32B 9/04**

(54) Verbundplatte mit einer Natursteinschicht.

(30) Priorität: **08.07.86 AT 1841/86**
**06.02.87 AT 243/87**
**26.08.86 AT 933/87**

(43) Veröffentlichungstag der Anmeldung:
**13.01.88 Patentblatt 88/02**

(45) Bekanntmachung des Hinweises auf die
Patenterteilung:
**25.03.92 Patentblatt 92/13**

(84) Benannte Vertragsstaaten:
**AT BE CH DE ES FR GB GR IT LI LU NL SE**

(56) Entgegenhaltungen:
**AT-A- 352 966**
**DE-A- 2 929 963**
**DE-B- 2 156 181**

(73) Patentinhaber: **Leis, Rudolf**
**Nr. 128 a**
**A-5421 Adnet(AT)**

(72) Erfinder: **Leis, Rudolf**
**Nr. 128 a**
**A-5421 Adnet(AT)**

(74) Vertreter: **Torggler, Paul, Dr. et al**
**Wilhelm-Greil-Strasse 16**
**A-6020 Innsbruck(AT)**

## Beschreibung

Die Erfindung betrifft eine Verbundplatte mit einer Natursteinshicht, die eine Sichtfläche und eine Rückseite aufweist, und mit einer Verstärkungsschicht, die eine mit der Rückseite der Natursteinschicht verbundene, Zugkräfte aus konkaven Verbiegungen der Sichtfläche aufnehmende Faserschicht aufweist, sowie ein Verfahren und eine Vorrichtung zu deren Herstellung.

Eine derartige, als Bodenplatte bzw. auch Verkleidungsplatte ausgebildete Verbundplatte ist beispielsweise der DE-A-34 15 779 zu entnehmen. Sie zeigt eine Natursteinplatte mit einer rückseitigen Zugbewehrungsschicht, die aus in Zugrichtung verlaufenden, in Kunstharz eingebetteten Bändern, insbesondere aus Kohlefasern besteht, und zur Verlegung in einem Mörtel- oder Kiesbett bestimmt ist. Die Zugbewehrung ist natürlich in der Lage, positive Belastungsmomente aus einer konkaven Durchbiegung der Natursteinplatte aufzunehmen, negativen Belastungsmomenten kann sie jedoch nicht entgegenwirken. Da bei der Einbettung in die Untertage eine mittige Anhäufung des Bettmaterials nicht ausschließbar ist, wird der Bruch der Natursteinplatte durch negative Belastungsmomente dadurch verhindert, daß in einem Randauflagestreifen freilassenden Mittelfeld eine elastisch zusammendrückbare Verdrängungsschicht etwa aus Weichschaumstoff aufgebracht wird, sodaß das Plattenauflager ausschließlich im Umfangsbereich gegeben ist.

Andererseits sind glasfaserverstärkte Kunststoffschichten für Zug- und Druckbewehrung als Zwischenlagen von mehreren Holzspanplatten für Treppenstufen, Podestplatten usw. aus der DE-A-23 64 321 bekannt.

Bei der Herstellung von Natursteinplatten lassen sich ohne besondere Hilfsmittel nur minimale Plattenstärken von etwa 18 bis 20 mm erzielen, wobei die Platten aus vollen Blöcken mittels Sägegattern geschnitten werden. Platten mit geringerer Dicke brechen durch die Vibrationen der Säge, durch die sowohl Zug- als auch Druckkräfte auftreten. Die Natursteinplatten weisen weiters auch ein relativ hohes Gewicht auf, sodaß deren behutsame Handhabung erschwert ist, wodurch die Bruchgefahr nochmals erhöht ist. Es hat sich in der Folge gezeigt, daß leichte Steinplatten dann hergestellt werden können, wenn der Naturstein nur eine Schicht einer Verbundplatte ist, wobei eine zweite Schicht aus einem leichten Trägermaterial besteht. Ein derartiges Verfahren ist beispielsweise aus der DE-A-21 29 057 bekannt geworden. Dort wird an die aus den vollen Blöcken geschnittenen Platten in einer Form beidseitig eine Kunststoffschicht angeschäumt, die den Naturstein verstärkt, sodaß eine nachfolgende Trennung ohne Beschädigung möglich wird. Dieses Verfahren läßt sich gegebenenfalls wiederholen, sodaß Natursteinschichten mit 1 bis 2 mm erzielbar sind.

Die Halbierungsschnitte müssen infolge abnehmender Schichtdicke präzise angesetzt werden. Es ist klar, daß bei herzustellenden Schichtdicken von 1 bis 2 mm auch geringfügige Abweichungen der Schnittebene bereits die Natursteinschicht zerstören. Derartige Natursteinplatten müssen daher einzeln geschnitten werden, sodaß die für die Steinplattenherstellung üblichen Mehrfachsägegatter kaum einsetzbar sind. Da sich bei der Aneinanderreihung mehrerer beidseitig geschäumter Kunststoffplatten minimale Dickenfehler addieren können, ist es durchaus denkbar, daß, etwa bei einem Paket von zehn Platten, ab der vierten Platte die Halbierungsschnitte neben der Natursteinschicht liegen.

Ein weiteres Verfahren beschreibt die DE-A-28 33 874. Hier tritt das Problem der exakten Positionierung der Schnittebenen nicht auf. In einem Mehrfachsägegatter wird ein Natursteinblock in größeren Abständen eingeschnitten, wobei an der Auflageseite ein Verbindungssteg belassen wird. Die entstandenen Spalten werden mit expandierendem Kunstharz oder anderem Material zumindest teilweise gefüllt. Der Block wird dann verschoben und ein zweiter Schnitt über die gesamte Höhe vorgenommen. So entsteht eine Verbundplatte mit zwei äußeren Natursteinschichten, die über den Steg einseitig verbunden sind und der mittleren Füllschicht. Nun wird jede Außenseite mit einer verstärkenden Schicht, etwa einer Glasfaser-Kunstharz-Schicht überzogen, der Verbindungssteg abgetrennt und die fünfschichtige Verbundplatte entlang der mittleren Kunststoffschicht geteilt. Nach Reinigung, Schleifen und Polieren der freigelegten Natursteinsichtfläche liegen ebenfalls zweischichtige Verbundplatten mit einer beispielsweise 5 mm dicken Natursteinschicht vor. In einer Variante wird vor dem ersten Schneiden des Natursteinblocks dieser mit einem zusätzlichen Verbindungssteg (etwa aus Beton) versehen, sodaß auch der Erstschnitt über die gesamte Höhe des Natursteinblokkes geführt werden kann,und vor dem Entfernen der Sägeblätter werden in die Schnittfugen Abstandhalter eingesetzt, um die Distanzen bis zum Ausfüllen nicht zu verändern. Insgesamt ist dieses Verfahren relativ zeit- und arbeitsaufwendig, da die spätere Sichtfläche jeder Verbundplatte im ersten Schnitt erzeugt, für die Ausführung des zweiten Schnittes wieder vergossen und schließlich wieder freigelegt werden muß.

Die Erfindung hat es sich nun zur Aufgabe gestellt, eine Verbundplatte der eingangs genannten Art zu schaffen, die mit möglichst geringer Dicke sägbar und als bloße, statisch nicht tragende, großflächige Verkleidungsplatte einsetzbar ist.

Eine weitere Aufgabe der Erfindung liegt darin, ein Verfahren zur entwickeln, bei dem die Trennschnitte eines Paketes von beidseitig beschichteten Natursteinplatten diese auch tatsächlich halbieren.

Erfindungsgemäß weist zur Lösung dieser Aufgabe die Verstärkungsschicht der Verbundplatte zusätzlich zur zugbewehrenden Faserschicht mindestens eine Druckkräfte aus konvexen Verbiegungen der Sichtfläche aufnehmende Lage aus Kunstharz auf, die an der der Natursteinschicht abgewandten Seite der zugbewehrenden Faserschicht angeordnet ist.

Ein erfindungsgemäßer Verbundkörper besitzt somit nicht nur die bekannte Zugbewehrung, sondern auch eine Druckbewehrung, sodaß die senkrecht zur Schnittebene in beiden Richtungen wirkenden Vibrationskräfte ohne Beschädigung der Marmorplatte aufgenommen werden. Dabei kann eine sehr dünne Marmorschicht erzielt werden, die nach dem erforderlichen Schliff der Sägefläche vorzugsweise unter 3 mm liegt.

In einer bevorzugten Ausführung ist vorgesehen, daß die druckbewehrende Lage aus Kunstharz mit Verstärkungen versehen ist, die aus einem zur zugbewehrenden Faserschicht weisenden, engmaschigen Glasfasergewebe und aus einer anschließenden Glasfasermatte bestehen. Durch die Verstärkung der Druckbewehrung kann auch die Gesamtdicke der Kunststoffschicht sehr gering gehalten werden. Die zugbewehrende Faserschicht besteht vorzugsweise ebenfalls aus einer Glasfasermatte.

Ein erfindungsgemäßes Verfahren zur Herstellung derartiger Verbundplatten sieht vor, daß zuerst dicker geschnittene Natursteinplatten beidseitig jeweils mit der Verstärkungsschicht beschichtet werden, dann mehrere der beschichteten Natursteinplatten mit gleichen Abständen zwischen ihren Mittelebenen nebeneinander angeordnet und schließlich gleichzeitig in je zwei einseitig beschichtete Verbundplatten zerchnitten werden, worauf jede Schnittfläche vorzugsweise geschliffen und/oder poliert wird.

Für den Zuschnitt der dickeren Natursteinplatte wird vorteilhaft ein bekanntes Mehrfachsägegatter eingesetzt, d.h. ein Natursteinblock wird in herkömmlicher Weise in mehrere Natursteinplatten gleichzeitig zersägt. Die Natursteinplatten werden anschließend getrocknet und nach dem Trocknen beidseitig mit der Verstärkungsschicht überzogen. Dafür werden bevorzugt in Kunstharz eingebettete Glasfasern verwendet, die eine Zug- und Druckbewehrung bilden, wenn an den Naturstein eine erste Lage in Form einer Glasfasermatte, anschließend eine zweite Lage in Form eines engmaschigen Glasfasergewebes und schließlich als dritte Lage eine Glasfasermatte aufgebracht werden. Die Dicke dieser mehrlagigen Beschichtung beträgt etwa zwei Millimeter. Die so beschichteten Natursteinplatten werden nun paketeweise zusammengefaßt und auf dem Blockwagen eines Mehrfachsägegatters so aufgestellt, daß die Sägeblätter in den Mittelebenen der Natursteinplatten liegen. Die Ausrichtung erfolgt vorzugsweise mittels Abstandhaltern und die zwischen diesen gebildeten Hohlräume werden mit einem Füllmaterial zumindest teilweise gefüllt. Anschließend erfolgen die zweiten Schnitte, die die Sichtflächen der Verbundplatten erzeugen. Als Füllmaterial eignen sich vor allem beliebige Mörtel mit anorganischen oder organischen Bindemitteln, wobei ein wesentlicher Vorteil gegenüber dem oben erwähnten Verfahren nach der DE-A-2833874 darin liegt, daß die beschichtete Seite mit dem Füllmaterial in Berührung kommt, sodaß eine Entfernung des Füllmaterials von der Natursteinsichtfläche entfällt. Da die Bindung zwischen Füllmaterial und der Verstärkungsschicht im Normalfall gering ist, löst sich dieses bei der Entnahme der Verbundplatten aus dem Paket.

Eine erfindungsgemäße Vorrichtung zur Herstellung derartiger Verbundplatten, die ein Mehrfachsägegatter und einen Blockwagen umfaßt, sieht vor, daß der Blockwagen eine kippbare Plattform aufweist, daß in, vorzugsweise vier, senkrecht zur Kippachse verlaufenden Reihen pro aufzustellender beschichteter Natursteinplatte jeweils ein Abstandhalter vorgesehen ist, und daß kippachsenseitig eine feststehende und gegenüberliegend eine verstellbare Seitenstütze angeordnet ist.

Für die Beschickung des Blockwagens mit den beschichteten Natursteinplatten wird die Plattform des Blockwagens schräg hochgekippt, sodaß sich die Natursteinplatten an die Abstandhalter einseitig anlegen. Diese sind vorzugsweise entlang von Schienen verstellbar. Die verstellbare Seitenstütze wird an die letzte Platte des Paketes angeschoben und die Plattform in die Horizontale zurückgeklappt. Nach dem Ausfüllen der Hohlräume erfolgen die Halbierungsschnitte in den gewünschten Positionen, da sich Dickentoleranzen aus dem Erstschnitt und der Beschichtung nicht summieren können. Die einzeln verstellbaren Abstandhalter ermöglichen es auch bei sehr dünnen Platten deren Mittelebenen einzeln auf die Schnittebenen einzustellen.

Nachstehend wird nun die Erfindung anhand der Figuren der beiliegenden Zeichnungen näher beschrieben, ohne darauf beschränkt zu sein.

Es zeigen:
Fig. 1 eine doppelseitig beschichtete Natursteinplatte vor dem Trennschnitt,
Fig. 2 eine Verbundplatte nach der Erfindung,
Fig. 3 den Schichtaufbau im Detail,
Fig. 4 einen Natursteinblock vor dem Erstschnitt,
Fig. 5 und 6 die Bildung eines Paketes von beabstandeten Natursteinplatten,

Fig. 7 einen Schnitt nach der Linie VII-VII in Fig. 6, und

Fig. 8 das Plattenpaket vor dem Zweitschnitt.

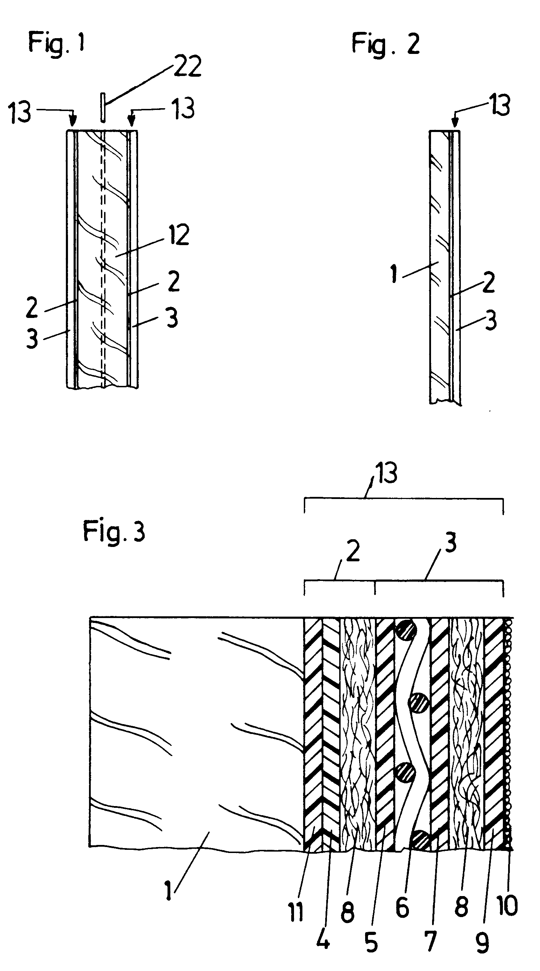

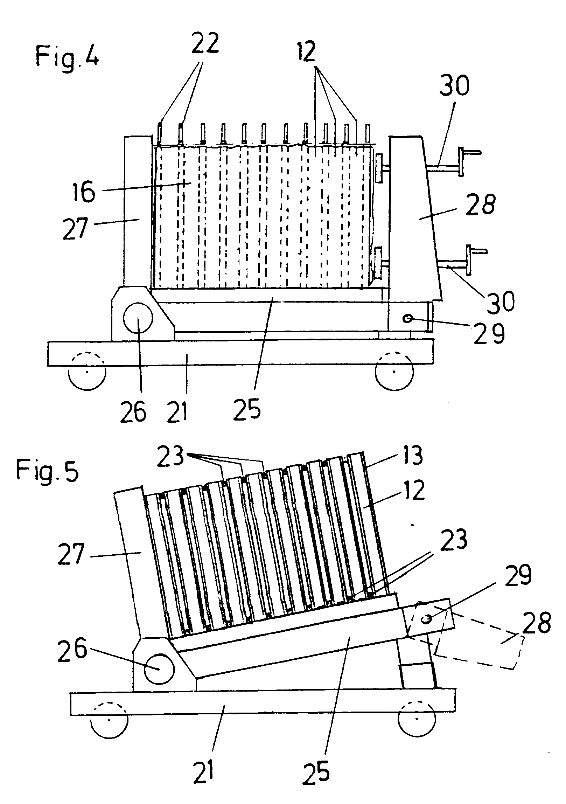

Ein Block 16 aus Naturstein, insbesondere Marmor, wird in einem Mehrfachsägegatter in Natursteinplatten 12 zersägt, die eine bestimmte Dikke, etwa 18 bis 20 mm, nicht unterschreiten können. Für die Durchführung des Erstschnittes (Fig. 4) ist der Block 16 in einem Blockwagen 21 angeordnet und zwischen zwei Seitenstützen 27,28 fixiert, von denen eine eine verstellbare Anpreßeinrichtung 30 aufweist. Die einzelnen Natursteinplatten 12 (Fig. 1) werden in einem Trockenraum bei etwa 100°C getrocknet und an den Schnittflächen mit einer Verstärkungsschicht 13 versehen. Die Verstärkungsschicht 13 setzt sich gemäß Fig. 3 aus einer zugbewehrenden Faserschicht 2, die mittels einer Epoxidharzschicht 11 als Haftbrücke mit der Natursteinschicht 1 verbunden ist, und einer anschließenden Lage 3 zusammen, die ihrerseits wieder mehrschichtig ist. Die Faserschicht 2 weist eine Epoxidharzschicht 4 als Einbettungsmasse für eine als Zugbewehrung dienende Glasfasermatte 8 auf, die bevorzugt ein Gewicht von 350 $g/m^2$ besitzt. Für eine Verlegung in Fliesenkleber kann noch eine abschließende Sandbeschichtung 10 mit einer Korngröße zwischen 0,1 und 0,25 mm vorgesehen sei. Die Sandbeschichtung 10 ist dann nicht vorgesehen, wenn die Verbundplatte als Bekleidung glatter Oberflächen, wie Türen, Möbel etc.,Verwendung findet.

Die mehrschichtige Lage 3 besteht aus einer an die Faserschicht 2 anschließenden Epoxidharzschicht 5 als Einbettungsmasse für ein Glasfasergewebe 6, einer weiteren Epoxidharzschicht 7 als Einbettungsmasse für eine zweite Faserschicht in Form einer Glasfasermatte 8 mit 225 $g/m^2$ und einer abschließenden Epoxidharzschicht 9, die die erwähnte Sandbeschichtung 10 tragen kann. Das Glasfasergewebe 6 und die Glasfasermatte 8 bilden dabei Verstärkungen 4 der als Druckbewehrung der Natursteinschicht 1 dienenden Lage 3 aus Kunstharz.

Zurückkommend auf Fig. 1 kann nun eine beidseitig mit einer zugbewehrenden Faserschicht 2 und einer druckbewehrenden Lage 3 aus Kunstharz beschichtete Natursteinplatte 12 problemlos mittels herkömmlicher Steinsägegatter oder Steinkreissägen zersägt werden Die ursprüngliche Dicke von 18 mm wird unter Berücksichtigung einer Sägeschnittbreite von 5 bis 7 mm auf eine Dicke der Natursteinschicht 1 (Fig. 2) von 5 bis 6 mm verringert und durch Beschleifen der späteren Sichtfläche auf eine Dicke von 2 bis 3 mm reduziert, wobei die Zug- und Druckbewehrung vibrationsbedingte Kräfte aufnimmt, und die Bruchgefahr praktisch ausgeschlossen ist. Da die Natursteinschicht 1 in der Verbundplatte etwa dessen halbe Dicke umfaßt, entstehen insgesamt Verkleidungsplatten von etwa 4 bis 5 mm Dicke, die eine Fläche bis zu 2 $m^2$ aufweisen und eine bemerkenswerte Elastizität besitzen.

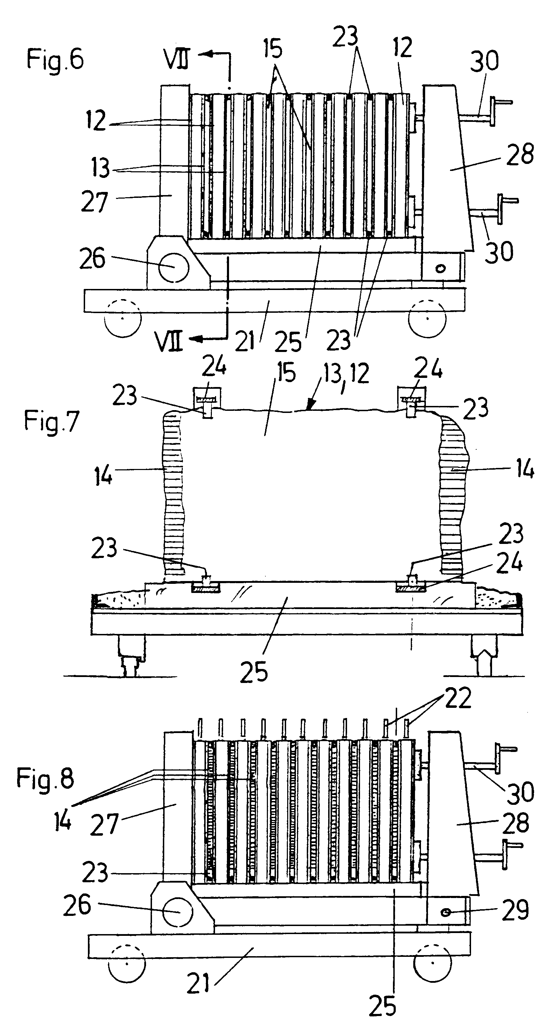

Da sowohl der Erstschnitt als auch die Verstärkungsbeschichtung gewisse Dickentoleranzen bedingen, besteht bei der Paketierung der beschichteten Platten für den Zweitschnitt die Gefahr einer zu großen Verschiebung der Schnittebenen. Um dies auszuschließen, sind am Blockwagen 21 zumindest an der Plattform 25 und an der Oberseite Abstandhalter 23 vorgesehen, die vorzugsweise entlang von Schienen 24 verstellbar sind (Fig. 7). Wie aus Fig. 5 ersichtlich, ist die Plattform 25 des Blockwagens 21 um die Achse 26 hochschwenkbar, wobei die verstellbare Seitenstütze 28 um die Achse 29 abgeklappt ist. In dem Aufnahmeraum können die beschichteten Natursteinplatten 12 paketiert werden, wobei die erste an die geneigte Seitenstütze 27 und alle weiteren an die Abstandhalter 23 angelegt werden, sodaß jede Natursteinplatte 12 sich in der gewünschten Position befindet, in der (Fig. 8) ein Sägeblatt 22 des Mehrfachsägegatters in der Mittelebene der Natursteinplatte 12 liegt. Die Natursteinplatten 12 werden dabei vorzugsweise mittels eines Klebers an der Plattform 27, etwa einer Unterlagsplatte aus Stein, fixiert. Eine Summierung von Dickenfehlern ist somit nicht möglich. Nach der Paketierung wird die verstellbare Seitenstütze 28 in die Arbeitslage verschwenkt und die Plattform 25 niedergeklappt. An die äußerste Natursteinplatte 12 wird die Anpreßeinrichtung 30 der Seitenstütze 28 angelegt, sodaß diese an ihre Abstandhalter 23 angepreßt wird.

Die Hohlräume 15 zwischen den Natursteinplatten 12 werden mit einem Füllmaterial 14, beispielsweise Mörtel, zumindest teilweise gefüllt, sodaß nach dem Erhärten ein lagefixiertes Paket für den Zweitschnitt vorbereitet ist. Bevorzugt wird das Füllmaterial 14 plattenformseitig einen Ausflußspalt für das beim Schneiden eindringende Wasser freilassen. Das in Fig. 7 gezeigte Füllmaterial erstreckt sich über die beiden vertikalen Randstreifen; dies genügt zur Festlegung der Natursteinplatten. Die die Zug- und Druckbewehrung bildende Verstärkungsschicht 13 nimmt die durch die Teilung der Natursteinplatte 12 entstehenden Kräfte auf. Der Zweitschnitt teilt jede beschichtete Natursteinplatte 12 in eine Verbundplatte mit sehr dünner Natursteinschicht 1 und der Verstärkungsschicht 13.

**Patentansprüche**

1.  Verbundplatte mit einer Natursteinschicht (1), die eine Sichtfläche und eine Rückseite aufweit, und mit einer Verstärkungsschicht (13), die eine mit der Rückseite der Natursteinschicht (1) verbundene, Zugkräfte aus konkaven Verbiegungen der Sichtfläche aufnehmende Faserschicht (2) aufweist, dadurch gekennzeichnet, daß die Verstärkungsschicht (13) mindestens eine Druckkräfte aus konvexen Verbiegungen der Sichtfläche aufnehmende Lage (3) aus Kunstharz aufweist, die an der der Natursteinschicht (1) abgewandten Seite der zugbewehrenden Faserschicht (2) angeordnet ist.

2. Verbundplatte nach Anspruch 1, dadurch gekennzeichnet, daß die druckbewehrende Lage (3) aus Kunstharz mit Verstärkungen versehen ist

3. Verbundplatte nach Anspruch 2, dadurch gekennzeichnet, daß die Verstärkungen aus einem zur zugbewehrenden Faserschicht (2) weisenden, engmaschigen Glasfasergewebe (6) und aus einer anschließenden Glasfasermatte (8) bestehen.

4. Verbundplatte nach Anspruch 1 oder 2, dadurch gekennzeichnet, daß die druckbewehrende Lage (3) aus Kunstharz wenigstens die halbe Dicke der höchstens 3 mm starken Natursteinschicht (1) aufweist.

5. Verbundplatte nach Anspruch 1, dadurch gekennzeichnet, daß die zugbewehrende Faserschicht (2) eine Glasfasermatte (8) enhält.

6. Verfahren zur Herstellung von aus einer dünnen (d.h. : Dicke ≤ 3mm) Natursteinschicht (1) und einer Verstärkungsschicht (13) bestehenden, Verbundplatten nach Anspruch 1, dadurch gekennzeichnet, daß zuerst dicker geschnittene Natursteinplatten (12) beidseitig jeweils mit der Verstärkungsschicht (13) beschichtet werden, dann mehrere der beschichteten Natursteinplatten (12) mit gleichen Abständen zwischen ihren Mittelebenen nebeneinander angeordnet und schließlich gleichzeitig in je zwei einseitig beschichtete Verbundplatten zerschnitten werden, worauf jede Schnittfläche vorzugsweise geschliffen und/oder poliert wird.

7. Verfahren nach Anspruch 6, dadurch gekennzeichnet, daß die Natursteinplatten (12) beidseitig mit einer Verstärkungsschicht (13) beschichtet werden, die als Zug- und Druckbewehrung in Kunstharz eingebettete Glasfasern (6,8) enthält.

8. Verfahren nach Anspruch 6 oder 7, dadurch gekennzeichnet, daß die beschichteten Natursteinplatten (12) unter Verwendung von Abstandhaltern (23) zu einem Paket zusammengesetzt, und die durch die Abstandhalter (23) gebildeten Hohlräume (15) zumindest teilweise gefüllt werden, und daß alle Natursteinplatten (12) entlang der Mittelebenen gleichzeitig geschnitten werden.

9. Vorrichtung zur Herstellung von Verbundplatten, die aus einer dünnen (d.h. : Dicke ≤ 3 mm) Natursteinschict (1) und einer Verstärkungsschicht (13) bestehen, mit einem Mehrfachsägegatter und einem Blockwagen (21), dadurch gekennzeichnet, daß der Blockwagen (21) eine kippbare Plattform (25) aufweit, daß in senkrecht zur Kippachse (26) verlaufenden Reihen pro aufzustellender beschichteter Natursteinplatte (12) jeweils ein Abstandhalter (23) vorgesehen ist, und daß kippachsenseitig eine feststehende und gegenüberliegend eine verstellbare Seitenstütze (27,28) angeordnet ist.

10. Vorrichtung nach Anspruch 9, dadurch gekennzeichnet, daß die Abstandhalter (23) entlang von Schienen (24) verstellbar sind.

**Claims**

1. A composite plate with a layer (1) of composite stone which has a visible surface and a rear side, and a strengthening layer (13) which has a fibre layer (2) connected to the rear side of the layer (1) of natural stone for carrying tensile forces arising out of concave bending of the visible surface, characterised in that the strengthening layer (13) has at least one layer (3) of synthetic resin for carrying compression forces arising out of convex bending of the visible surface, the layer (3) being disposed at the side of the tensile-reinforcing fibre layer (2) which is remote from the layer (1) of natural stone.

2. A composite plate according to claim 1 characterised in that the compression-reinforcing layer (3) of synthetic resin is provided with strenghtening means.

3. A composite plate according to claim 2 characterised in that the strengthening means comprise a close-mesh glass fibre cloth (6) facing towards the tensile-reinforcing fibre layer (2), and an adjoining glass fibre mat (8).

4. A composite plate according to claim 1 or claim 2 characterised in that the compression-reinforcing layer (3) of synthetic resin is of at least half the thickness of the layer (1) which is at most 3 mm in thickness.

5. A composite plate according to claim 1 characterised in that the tensile-reinforcing fibre layer (2) includes a glass fibre mat (8).

6. A process for the production of composite plates comprising a thin (i.e.: thickness ≤ 3 mm) layer (1) of natural stone and a strengthening layer (13), according to claim 1, characterised in that plates (12) of natural stone which are first cut thicker are each covered on respective sides with the strengthening layer (13), then a plurality of the covered natural stone plates (12) are arranged side-by-side with equal spacings between their central planes and finally each simultaneously cut up into a respective pair of composite plates which are covered on one side, whereupon each cut surface is preferably ground and/or polished.

7. A process according to claim 6 characterised in that the natural stone plates (12) are covered on both sides with a strengthening layer (13) which includes glass fibres (6, 8) embedded in synthetic resin as reinforcement means in respect of tensile and compression forces.

8. A process according to claim 6 or claim 7 characterised in that the covered natural stone plates (12) are assembled to form a pack, using spacers (23), and the cavities formed by the spacers (23) are at least partially filled, and that all natural stone plates (12) are simultaneously cut along the central planes.

9. Apparatus for the production of composite plates which comprise a thin (i.e.: thickness ≤ 3 mm) layer (1) of natural stone and a strengthening layer (13), comprising a multiple saw frame and a block carriage (21) characterised in that the block carriage (21) has a tiltable platform (25), that a respective spacer (23) is provided for each covered natural stone plate (12) to be set up, in rows extending perpendicularly to the tilting axis (26), and that a fixed lateral support (27) is arranged at the tilting axis end and a displaceable lateral support (28) is arranged in opposite relation thereto.

10. Apparatus according to claim 9 characterised in that the spacers (23) are displaceable along rails (24).

**Revendications**

1. Panneau composite comprenant une couche (1) de pierre naturelle ayant une surface visible et un côté arrière, ainsi qu'une couche de renfort (13) qui comporte une couche de fibres (2) reliée au côté arrière de la couche (1) de pierre naturelle et absorbant les forces de traction provoquées par les flexions concaves de la surface visible, caractérisé en ce que la couche de renfort (13) comprend au moins une couche (3) de résine synthétique qui absorbe les forces de compression provoquées par les flexions convexes de la surface visible et qui est disposée sur le côté de la couche de fibres (2) résistant à la traction qui est tourné à l'opposé de la couche (1) de pierre naturelle.

2. Panneau composite selon la revendication 1, caractérisé en ce que la couche (3) de résine synthétique résistant à la compression comprend des renforts.

3. Panneau composite selon la revendication 2, caractérisé en ce que les renforts consistent en un tissu (6) à mailles étroites de fibres de verre situé du côté de la couche de fibres (2) résistant à la traction et en un feutre (8) de fibres de verre placé à la suite de ce tissu.

4. Panneau composite selon la revendication 1 ou 2, caractérisé en ce que la couche (3) de résine synthétique résistant à la compression a au moins la moitié de l'épaisseur de la couche (1) de pierre naturelle dont l'épaisseur est au maximum de 3 mm.

5. Panneau composite selon la revendication 1, caractérisé en ce que la couche de fibres (2) résistant à la traction est un feutre (8) de fibres de verre.

6. Procédé de production de panneaux composites se composant d'une couche mince (1) c'est-à-dire : épaisseur ≤ 3 mm) de pierre naturelle et d'une couche (13) de renfort, caractérisé en ce que tout d'abord les plaques (12) de pierre naturelle coupées à une plus grande épaisseur sont revêtues sur chacun des deux côtés d'une couche de renfort (13), ensuite plusieurs des plaques (12) de pierre naturelle revêtues sont disposées côte à côte avec des distances égales entre leurs plans médians et finalement sont découpées simultanément, chacune en deux panneaux composites revêtus, chaque surface de coupe étant ensuite de préférence adoucie et/ou polie.

7. Procédé selon la revendication 6, caractérisé en ce que les plaques de pierre naturelle (12) sont revêtues des deux côtés d'une couche de renfort (13) qui renferme des fibres de verre (6, 8) noyées dans de la résine synthétique de manière à former une armature résistant à la traction et à la compression.

8. Procédé selon la revendication 6 ou 7, caractérisé en ce que les plaques revêtues (12) de pierre naturelle sont assemblées en une rangée à l'aide d'entretoises (23) et les cavités (15) formées par les entretoises (23) sont remplies au moins partiellement et en ce que toutes les plaques (12) de pierre naturelle sont coupées simultanément le long de leur plan médian.

9. Dispositif de production de panneaux composites se composant d'une couche mince (c'est-à-dire épaisseur ≤ à 3 mm), de pierre naturelle (1) et d'une couche de renfort (13) au moyen d'une scie multiple à cadre et d'un chariot à roulettes (21), caractérisé en ce que le chariot à roulettes (21) comporte une plate-forme basculante (25), en ce qu'une entretoise (23) est prévue pour chaque plaque (12) de pierre naturelle revêtue devant être mise debout en rangées perpendiculaires à l'axe de basculement (26) et en ce qu'un appui latéral (27, 28) est disposé en position fixe du côté de l'axe de basculement et un autre est monté mobile du côté opposé.

10. Dispositif selon la revendication 9, caractérisé en ce que les entretoises (23) sont déplaçables le long de rails (24).

Fig. 1

Fig. 2

Fig. 3

Fig.4

Fig.5

EP 0 252 434 B1

Fig.6

Fig.7

Fig.8